# EUROPÄISCHE PATENTSCHRIFT

(11) **EP 2 507 009 B1**
(45) Veröffentlichungstag und Bekanntmachung des Hinweises auf die Patenterteilung: **15.11.2017**
(21) Anmeldenummer: 10776284.1
(22) Anmeldetag: 24.09.2010
(51) Int. Cl.: B23K 31/02, F01D 5/30, F01D 5/34, B23K 101/00, B23P 6/00, F01D 5/00

(54) **VERFAHREN ZUM REPARIEREN EINES BAUTEILS EINER STRÖMUNGSMASCHINE**
METHOD FOR REPAIRING A COMPONENT OF A TURBOMACHINE
PROCÉDÉ POUR RÉPARER UNE PIÈCE D'UNE TURBOMACHINE

(30) Priorität: 26.09.2009 DE 102009043136
(43) Veröffentlichungstag der Anmeldung: 10.10.2012
(73) Patentinhaber: MTU Aero Engines AG, 80995 München (DE)
(72) Erfinder: EBERLEIN, Armin, 86836 Klosterlechfeld (DE); FRANTZ, Georg, Helmut, 81375 München (DE)
(86) Internationale Anmeldenummer: PCT/DE2010/001127
(87) Internationale Veröffentlichungsnummer: WO 2011/035773

(56) Entgegenhaltungen:
- EP-A2- 1 138 431
- EP-A2- 1 618 986
- DE-A1- 3 909 733
- DE-A1- 4 225 443
- DE-A1-102005 051 229
- DE-A1-102007 019 949
- US-A1- 2008 000 947

## Beschreibung

Die Erfindung betrifft ein Verfahren zum Reparieren eines beschädigten Bauteils einer Strömungsmaschine sowie eine Ersatzteilträgervorrichtung zum Anordnen eines Ersatzteils im Bereich einer Beschädigung eines Bauteils einer Strömungsmaschine.

Bisherige Reparaturverfahren zum Reparieren von Bauteilen für Strömungsmaschinen sind vergleichsweise aufwändig, fehleranfällig, nicht reproduzierbar und verursachen hohe Kosten. Zur örtlichen Blatterneuerung von Schaufeln für Integralrotoren (sog. Blisks bzw. Blings) wird beispielsweise ein Neuteil zunächst auf die erforderliche Profilierung abgestimmt und anschließend mit der Schaufel verschweißt. Die bisherigen Schweißergebnisse an Bauteilen aus hochtemperaturbeständigen Legierungen wie beispielsweise Nickel- oder Cobalt-Basislegierungen, Titanaluminiden und dergleichen zeigen jedoch eine hohe Rissanfällig beim Ersetzen der beschädigten Schaufelbereiche.

Ein verbessertes Verfahren zum Reparieren eines beschädigten Bauteils einer Strömungsmaschine ist beispielsweise bereits aus dem Dokument DE 42 25 443 A1 bekannt und dient zur Herstellung einer Schweißverbindung von Bauteilen für Turbomaschinen. Dabei werden zunächst ein Altteil und ein Neuteil bzw. Ersatzteil nach Art einer Nut-Feder-Verbindung aufeinander gesteckt, wonach der übrige Zwischenraum zwischen den beiden Bauteilen mit einem Schweißpulver ausgefüllt wird. Anschließend werden die beiden Bauteile miteinander verschweißt. Das Neuteil (5) kann mit einem Halterungsabschnitt (8) vorgefertigt sein, wobei letzterer die Wärmeabfuhr verbessern kann.

Auch die Dokumente EP 1 618 986 A2, DE 39 09 733 A1 und EP 1 138 431 A2 betreffen Verfahren zum Reparieren eines beschädigten Bauteils einer Strömungsmaschine. Auch diesen Verfahren ist gemeinsam, dass das Ersatzteil und die Ersatzteilträgervorrichtung zunächst integral verbunden sind und dass nach der Verbindung von Bauteil und Ersatzteil, z. B. durch Schweißen, die Ersatzteilträgervorrichtung abgetrennt bzw. zerstört werden muss.

Aus dem Dokument US 2008/000947 A1 ist eine Vorrichtung zum Reparieren eines beschädigten Bauteils einer Strömungsmaschine bekannt. Diese Vorrichtung (20) weist eine aufwändige Ersatzteilträgervorrichtung (30) mit Schrauben, Anschlägen und Schwenkgliedern zum Fixieren und Manipulieren des Ersatzteils (11) auf. Abgesehen von der Komplexität ermöglicht die Vorrichtung (30) keine effektive Wärmeabfuhr beim Anschweißen des Ersatzteils (11).

Aufgabe der vorliegenden Erfindung ist es, eine verbesserte, reproduzierbare und kostengünstigere Reparatur eines beschädigten Bauteils einer Strömungsmaschine zu ermöglichen.

Die Aufgabe wird erfindungsgemäß durch ein Verfahren gemäß Patentanspruch 1 zum Reparieren eines beschädigten Bauteils einer Strömungsmaschine sowie durch eine Ersatzteilträgervorrichtung gemäß Patentanspruch 8 zum Anordnen eines Ersatzteils im Bereich einer Beschädigung eines Bauteils einer Strömungsmaschine gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Ersatzteilträgervorrichtung und umgekehrt anzusehen sind.

Dabei umfasst ein Verfahren zum Reparieren eines beschädigten Bauteils einer Strömungsmaschine, welches eine verbesserte, reproduzierbare und kostengünstigere Reparatur eines beschädigten Bauteils einer Strömungsmaschine ermöglicht, zumindest die Schritte Bereitstellen eines Ersatzteils, welches mit einer gegenüber dem Ersatzteil verdickt ausgebildeten Ersatzteilträgervorrichtung zum Puffern von mechanischer und thermischer Energie verbunden ist, Anordnen des mit der Ersatzteilträgervorrichtung verbundenen Ersatzteils im Bereich der Beschädigung des Bauteils, Verbinden des Ersatzteils mit dem Bauteil, wobei beim Verbinden freigesetzte mechanische thermische Energie mittels der Ersatzteilträgervorrichtung gepuffert wird, und Entfernen der Ersatzteilträgervorrichtung vom mit dem Bauteil verbundenen Ersatzteil. Aufgrund der Verwendung der gegenüber dem Ersatzteil aufgedickten Ersatzteilträgervorrichtung kann beim Verbinden freiwerdende bzw. eingebrachte Energie vom Ersatzteil abgeleitet und von der Ersatzteilträgervorrichtung gepuffert werden, wodurch sich die thermische und mechanische Belastung des Ersatzteils erheblich reduziert. Im Unterschied zum Stand der Technik wird mit anderen Worten eine auf das Ersatzteil abgestimmte Ersatzteilträgervorrichtung verwendet, welche eine Art Rahmenstruktur bildet und aufgrund ihrer gegenüber dem Ersatzteil verdickten und damit voluminöseren Ausgestaltung einen Wärmepuffer bereitstellt, so dass sie mechanische Kräfte, Verformungsarbeit und Wärmeenergie aufnehmen kann. Durch das erfindungsgemäße Verfahren kann das sogenannte "Patching" zuverlässig, fehlerfrei und besonders schnell, einfach und kostengünstig durchgeführt werden, so dass insbesondere teuere und hochwertige Bauteile wirtschaftlich repariert und wiedereinsatzfähig gemacht werden können. Die erforderlichen qualitativen Forderungen und Merkmale der Reparatur werden dabei stabil und reproduzierbar erfüllt, so dass ein prozessstabiles Verbinden von Ersatzteil und Bauteil unter Vermeidung von Fehlstellen sichergestellt ist.

Erfindungsgemäß wird eine wiederverwendbare Ersatzteilträgervorrichtung mit einer Nut zum lösbaren Verbinden mit dem Ersatzteil verwendet und ein vorab mit der Ersatzteilträgervorrichtung verbundenes Ersatzteil bereitgestellt. Unter einer wiederverwendbaren Ersatzteilträgervorrichtung ist dabei eine Ersatzteilträgervorrichtung zu verstehen, die sowohl beim Verbinden als auch beim Entfernen abgesehen von üblichen Gebrauchs- und Abnutzungserscheinungen zumindest im Wesentlichen unbeschädigt bleibt und daher für mehrere Verfahrensdurchgänge wiederholt verwendet werden kann. Die Verwendung einer wiederverwendbaren Ersatzteilträgervorrichtung erlaubt im Unterschied zum Stand der Technik eine besonders hohe Kostensenkung, da eine Ersatzteilträgervorrichtung für eine Vielzahl von Reparaturdurchgängen verwendet werden kann.

Erfindungsgemäß wird eine Ersatzteilträgervonichtung verwendet, die nicht einteilig mit dem Ersatzteil, sondern als eigenständiges Bauelement ausgebildet ist. Die Ersatzteilträgervorrichtung wird vor dem Anordnen des Ersatzteils am Bauteil mit dem Ersatzteil lösbar verbunden. Durch die lösbare Verbindung zwischen dem Ersatzteil und der Ersatzteilträgervorrichtung kann das abschließende Entfernen der Ersatzteilträgervorrichtung vom reparierten Bauteil entsprechend schnell und einfach durchgeführt werden. Auf diese Weise kann eine optimal an die jeweilige Beschädigung bzw. an die jeweilige Geometrie von Bau- und Ersatzteil angepasste Ersatzteilträgervorrichtungen verwendet werden, wodurch eine entsprechend präzise Anordnung und Verbindung des Ersatzteils ermöglicht ist. Dabei können das Ersatzteil und die Ersatzteilträgervorrichtungen grundsätzlich aus dem gleichen oder aus unterschiedlichen Materialien bestehen.

Erfindungsgemäß wird das Ersatzteil zum Verbinden mit der Ersatzteilträgervorrichtung zumindest bereichsweise in einer korrespondierend ausgebildeten Nut der Ersatzteilträgervorrichtung angeordnet. Mit anderen Worten werden das Ersatzteil und die Ersatzteilträgervorrichtung im Sinne einer Nut- und Federverbindung durch einen vorzugsweise engtolerierten Steck- und/oder Schiebsitz miteinander gekoppelt. Hierdurch wird eine einfache, kostengünstige und lösbare Kopplung zwischen der Ersatzteilträgervorrichtung und dem Ersatzteil erzielt, wodurch die Ersatzteilträgervorrichtung besonders schnell und einfach wieder vom reparierten Bauteil entfernt und darüber hinaus einfach wiederverwendet werden kann.

In einer vorteilhaften Ausgestaltung der Erfindung ist vorgesehen, dass das Ersatzteil mittels der Ersatzteilträgervorrichtung zumindest im Wesentlichen verformungsfrei und/oder lagefest gegenüber dem Bauteil und/oder mit einer eingestellten Vorspannung am Bauteil angeordnet wird. genüber dem Bauteil und/oder mit einer eingestellten Vorspannung am Bauteil angeordnet wird. Auf diese Weise wird sichergestellt, dass beim anschließenden Verbinden von Ersatz- und Bauteil auftretende Dehn- und Schrumpfkräfte besonders effizient durch die Ersatzteilträgervorrichtung aufgenommen werden und das Ersatzteil verformungsfrei mit dem Bauteil verbunden werden kann. Indem das Ersatzteil mit einer eingestellten Vorspannung am Bauteil angeordnet wird, d.h. indem die Ersatzteilträgervorrichtung das Ersatzteil mit einer genau eingestellten Kraft gegen das Bauteil drückt, wird zudem gewährleistet, dass einerseits sämtliche Toleranzen kompensiert werden und dass das reparierte Bauteil andererseits nur im elastischen Bereich beansprucht wird. Dabei kann weiterhin vorgesehen sein, dass die Ersatzteilträgervorrichtung sowohl mit dem Ersatz- als auch mit dem Bauteil gekoppelt wird, wodurch eine weitere einfache Möglichkeit zur relativen Lagesicherung und Anordnung des Ersatzteils gegenüber dem Bauteil erzielt wird.

Um eine besonders einfache Lagesicherung des Ersatzteils beim Anordnen am Bauteil zu erzielen, hat es sich weiterhin als vorteilhaft gezeigt, wenn das Bauteil beim Anordnen bereichsweise in eine insbesondere nutförmige Vertiefung des Ersatzteils eingebracht wird.

Eine mechanisch besonders stabile Verbindung von Ersatz- und Bauteil wird in weiterer Ausgestaltung dadurch erzielt, dass das Ersatzteil mittels eines Schweißverfahrens, insbesondere durch Elektronenstrahlschweißen, Laserschweißen, Wolfram-Inertgas-Schweißen, Plasmaschweißen, Stich-Loch-Schweißen, Induktionsschmelzschweißen und/oder Widerstandsschweißen, mit dem Bauteil verbunden wird. Das Schweißverfahren kann dabei in Abhängigkeit der jeweiligen Materialpaarung von Ersatz- und Bauteil ausgewählt werden, wobei vorzugsweise Schweißverfahren mit lokal begrenzter Wänneeinbringung, sicherer Durchschweißung, gleichmäßiger Schweißnahtbildung und hoher Schweißnahtqualität bevorzugt sind.

Um eine besonders hohe Reparaturqualität sicherzustellen, hat es sich in weiterer Ausgestaltung als vorteilhaft gezeigt, wenn das Bauteil nach dem Entfernen der Ersatzteilträgervorrichtung zumindest in seinem Verbindungsbereich mit dem Ersatzteil bearbeitet, insbesondere feinbearbeitet wird. Vorzugsweise wird dabei zumindest die ursprüngliche Kontur des Bauteils wieder hergestellt.

Besonders hohe Kostensenkungen werden dadurch erzielt, dass als Bauteil eine Schaufel einer thermischen Gasturbine repariert wird. Insbesondere bei der Reparatur von Schaufeln integral beschaufelter Rotoren (sog. Blisks oder Blings) ermöglicht das erfindungsgemäße Verfahren erstmals eine bislang nicht erreichte Wirtschaftlichkeit.

Ein weiterer Aspekt der Erfindung betrifft eine Ersatzteilträgervorrichtung zum Anordnen eines Ersatzteils im Bereich einer Beschädigung eines Bauteils einer Strömungsmaschine, welche einen Kopplungsbereich zum Verbinden des Ersatzteils mit der Ersatzteilträgervorrichtung und einen Energiepufferbereich umfasst, welcher gegenüber dem am Kopplungsbereich anzuordnenden Ersatzteil verdickt ausgebildet ist und mittels welchem beim Verbinden des Ersatzteils mit dem Bauteil freigesetzte thermische und mechanische Energie pufferbar ist. Mit Hilfe einer derartigen Ersatzteilträgervorrichtung ist eine verbesserte, reproduzierbare und kostengünstigere Reparatur eines beschädigten Bauteils einer Strömungsmaschine ermöglicht, da die bislang beim Verschweißen mit dem Ersatzteil auftretenden Dehn- und Schrumpfkräfte sowie Thermospannungen unterbunden werden können. Darüber hinaus können die bislang auftretenden hohen Temperaturgradienten, die zu entsprechenden Riss- und Fehlstellenbildungen führten, vermieden werden. Daher können mit Hilfe der erfindungsgemäßen Ersatzteilträgervorrichtung auch teuere Hochwertteile wie beispielsweise Rotorschaufeln von Strömungsmaschine einfach repariert und wiedereinsatzfähig gemacht werden. Die erforderlichen qualitativen Forderungen und Merkmale der Reparatur sind dabei stabil und reproduzierbar darstellbar. Bezüglich weiterer Vorteile wird auf die vorhergehende Beschreibung verwiesen.

Erfindungsgemäß ist der Kopplungsbereich zum mehrfachen Koppeln und Entkoppeln von Ersatzteilen ausgebildet und weist dabei eine Nut auf, um das Ersatzteil zumindest über einen Teillängenbereich abzustützen. Durch einen mehrfach koppel- und entkoppelbaren Kopplungsbereich ist eine einfache Möglichkeit gegeben, die Ersatzteilträgervorrichtung für mehrere Reparaturdurchgänge zu verwenden, wodurch sich eine besonders hohe Kostensenkung ergibt, da die Ersatzteilträgervorrichtung nach dem Verbinden von Ersatz- und Bauteil nicht aufwändig zerstört werden muss. Statt dessen kann ein und dieselbe Ersatzteilträgervorrichtung bei der Reparatur vieler beschädigter Bauteile verwendet werden.

Eine besonders hohe Reparaturgüte wird in weiterer Ausgestaltung dadurch erzielt, dass die Ersatzteilträgervorrichtung ausgebildet ist, das Ersatzteil lagefest gegenüber dem Bauteil und/oder mit einer einstellbaren Vorspannung am Bauteil anzuordnen. Indem das Ersatzteil mit einer einstellbaren Vorspannung am Bauteil anordenbar ist, d.h. indem die Ersatzteilträgervorrichtung das Ersatzteil mit einer genau einstellbaren Kraft gegen das Bauteil drücken kann, wird gewährleistet, dass einerseits sämtliche Toleranzen kompensiert werden und dass das reparierte Bauteil andererseits nur im elastischen Bereich beansprucht wird.

Dabei hat es sich weiterhin als vorteilhaft gezeigt, dass die Ersatzteilträgervorrichtung eine Halteeinrichtung umfasst, mittels welcher die Ersatzteilträgervorrichtung lösbar mit dem Bauteil koppelbar ist. Hierdurch ist eine weitere konstruktiv einfache Möglichkeit zur relativen Lagesicherung des Ersatzteils gegenüber dem Bauteil gegeben.

Weitere Vorteile ergeben sich dadurch, dass der Kopplungsbereich und/oder der Energiepufferbereich lösbar mit der Halteeinrichtung verbunden sind. Indem der Kopplungsbereich und/oder der Energiepufferbereich lösbar mit der Halteeinrichtung verbunden und von dieser abnehmbar sind kann die Ersatzteilträgervorrichtung besonders einfach an unterschiedliche Ersatzteile und unterschiedliche Bauteile angepasst werden.

In einer weiteren vorteilhaften Ausgestaltung der Erfindung ist vorgesehen, dass die Halteeinrichtung ein Spannmittel zum lösbaren Einspannen des Bauteils umfasst. Hierdurch ist auf kostengünstige Weise eine schnelle und einfache Lagefixierung von Ersatzteilträgervorrichtung und Bauteil zueinander ermöglicht.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine schematische Perspektivansicht einer mit einem Ersatzteil verbundenen Ersatzteilträgervorrichtung gemäß dem Stand der Technik;
- Fig. 2: eine schematische Perspektivansicht der mit einem Ersatzteil verbundenen Ersatzteilträgervorrichtung gemäß der Erfindung;
- Fig. 3: eine schematische und ausschnittsweise Perspektivansicht eines Rotors einer Strömungsmaschine, welcher mit der Ersatzteilträgervorrichtung gekoppelt ist, wobei mittels der Ersatzteilträgervorrichtung ein Ersatzteil an einem beschädigten Bauteil des Rotors angeordnet ist;
- Fig. 4: eine schematische Seitenansicht des Ersatzteils, welches mit einer Ersatzteilträgervorrichtung gemäß einem weiteren Ausführungsbeispiel und einem zu reparierenden Bauteil verbunden ist;
- Fig. 5: eine schematische Schnittaufsicht des mit der Ersatzteilträgervorrichtung und dem Bauteil verbundenen Ersatzteils entlang der in Fig. 4 gezeigten Schnittlinie V-V;
- Fig. 6: eine schematische Schnittaufsicht des mit einer Ersatzteilträgervorrichtung und dem Bauteil verbundenen Ersatzteils;
- Fig. 7: eine schematische Schnittaufsicht des mit einer alternativen Ersatzteilträgervorrichtung und dem Bauteil verbundenen Ersatzteils; und
- Fig. 8: eine schematische Schnittaufsicht des mit einer weiteren alternativen Ersatzteilträgervorrichtung und dem Bauteil verbundenen Ersatzteils.

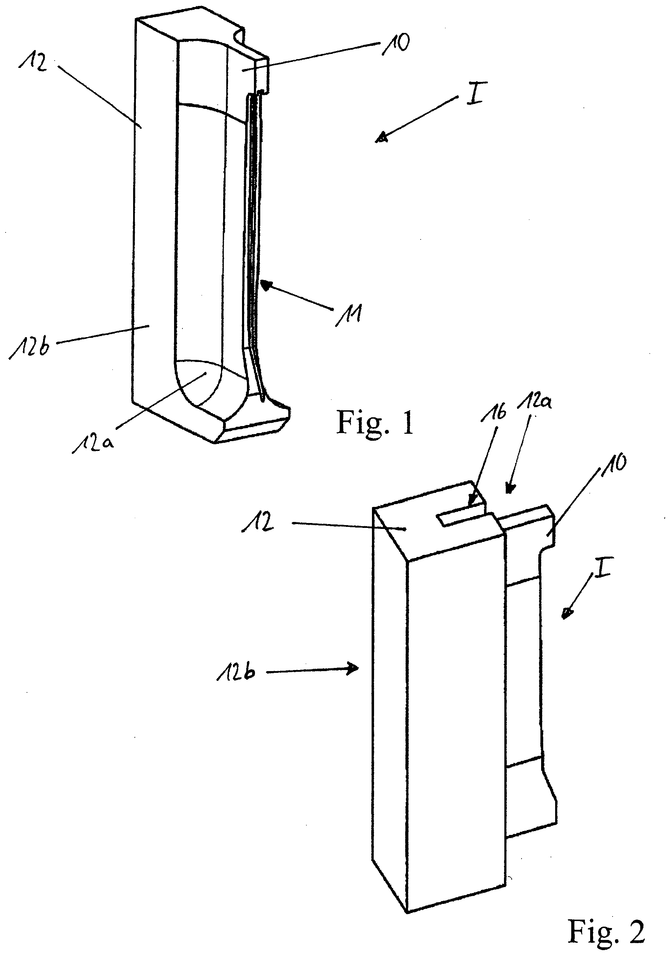

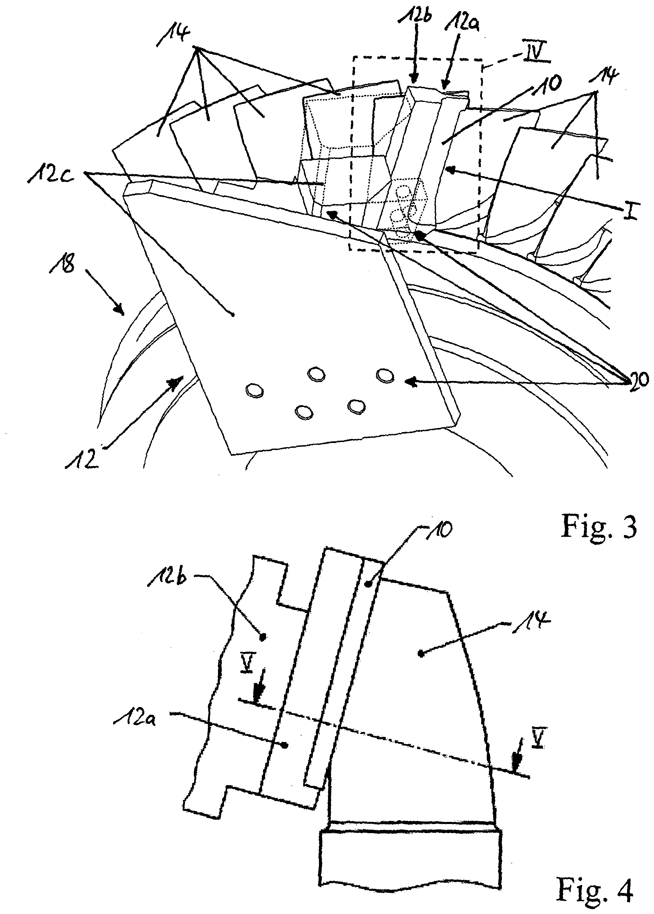

Fig. 1 zeigt eine schematische Perspektivansicht einer mit einem Ersatzteil 10 verbundenen Ersatzteilträgervorrichtung 12 gemäß dem Stand der Technik. Die Ersatzteilträgervorrichtung 12 weist dabei einen Kopplungsbereich 12a auf, über welchen die Ersatzteilträgervorrichtung 12 mit dem Ersatzteil 10 verbunden ist. An den Kopplungsbereich 12a schließt ein Energiepufferbereich 12b an, welcher gegenüber dem am Kopplungsbereich 12 angeordneten Ersatzteil 10 verdickt ausgebildet ist und mittels welchem beim Verbinden des Ersatzteils 10 mit einem zu reparierenden Bauteil 14 (s. Fig. 3) freigesetzte thermische und mechanische Energie gepuffert wird. Die genaue Wirkungsweise wird im Folgenden näher erläutert werden. Das Ersatzteil 10 und die Ersatzteilträgervorrichtung 12 sind dabei im vorliegenden Ausführungsbeispiel einteilig aus einem identischen Material wie das zu reparierende Bauteil 14, beispielsweise einer Nickel-, Cobalt- oder Titanbasislegierung, ausgebildet. Die Geometrie des Ersatzteils 10 und die Geometrie der Ersatzteilträgervorrichtung 12 ist darüber hinaus derart gestaltet, dass ein zum Verschweißen des Ersatzteils 10 mit dem beschädigten Bauteil 14 erforderlicher Schweißbrenner genügend Raum zum Verfahren hat.

Das Ersatzteil 10 ist seinerseits derart ausgebildet, dass der Übergang zwischen dem Ersatzteil 10 und dem zu reparierenden Bauteil 14 im Verschweißungsbereich I nahezu gleichförmig verläuft. Zur Anordnung des Ersatzteils 10 am zu reparierenden Bauteil 14 umfasst das Ersatzteil 10 eine nutförmige Vertiefung 11, in welche das Bauteil 14 bereichsweise eingeführt werden kann, um eine relative Lagesicherung zwischen Ersatzteil 10 und Bauteil 14 zu erzielen.

Die Wärmepufferfahigkeit, die Geometrie und gegebenenfalls das Material der Ersatzteilträgervorrichtung 12 und des Ersatzteils 10 sind derart ausgewählt, dass einerseits beim Verschweißen von Ersatzteil 10 und Bauteil 14 ein im Wesentlichen gleichmäßiger Temperaturgradient im Verschweißungsbereich I erzeugt und andererseits eine zur beschädigungsfreien Montage des Ersatzteils 10 ausreichende Versteifung erzielt wird. Das Ersatzteil 10 und das Bauteil 14 verursachen aufgrund ihrer ungleichen Masseverteilung beim Schweißen hohe Temperaturgradienten im Verschweißungsbereich I. Hierdurch würden das Ersatzteil 10 und das Bauteil 14 normalerweise ungleichförmigen Dehn- und Schrumpfvorgängen unterliegen, woraus im Stand der Technik eine erhöhte Riss- und Fehlstellenbildungen resultiert. Um dies zu verhindern, umfasst die Ersatzteilträgervorrichtung 12 den im Vergleich zum Ersatzteil 10 aufgedickt ausgebildeten Energiepufferbereich 12b, wobei die Aufdickung so gewählt ist, dass beim Verschweißen ein relativ gleichförmiger Temperaturgradient zwischen dem Ersatzteil 10 und dem Bauteil 14 entsteht. Der Ersatzteileinrichtung 12 stellt durch die massive Verdickung gleichzeitig eine Art Wärmereservoir bzw. Wärmepuffer und eine mechanische Versteifungsstruktur dar, so dass das Ersatzteil 10 und das Bauteil 14 beim Verbinden gegen thermisch und mechanisch bedingte Verformungen durch Dehn- und Schrumpfkräfte gesichert sind. Als zum Verbinden von Ersatzteil 10 und Bauteil 14 grundsätzlich geeignete Schweißverfahren sind beispielsweise Elektronenstrahlschweißen, Laserschweißen, Wolfram-Inertgas-Schweißen, Plasmaschweißen, Stich-Loch-Schweißen, Induktionsschmelzschweißen oder Widerstandsschweißen zu nennen.

Nach dem Verbinden des Ersatzteils 10 mit dem Bauteil 14 wird die Ersatzteilträgervorrichtung 12 mit Hilfe eines Trennverfahrens vom Ersatzteil 10 entfernt. Dabei kann grundsätzlich jedes für das Bauteil 14 bzw. das mit diesem verbundene Ersatzteil 10 erträgliche Verfahren angewendet werden. Als besonders geeignete Trennverfahren sind in diesem Fall Spanen, insbesondere Sägen, Fräsen und/oder Schleifen, und/oder Abtragen, insbesondere Erodieren und/oder Laserschneiden, zu nennen.

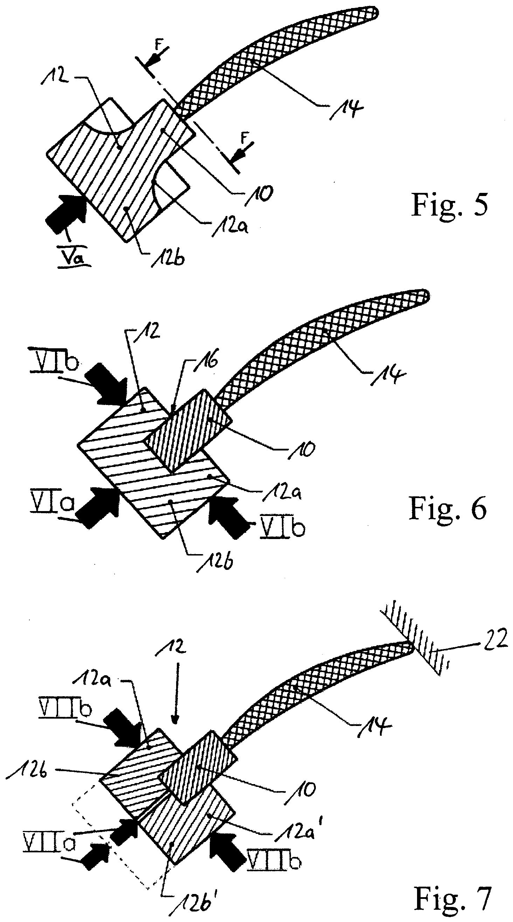

Fig. 2 zeigt eine schematische Perspektivansicht einer mit einem Ersatzteil 10 gekoppelten Ersatzteilträgervorrichtung 12 gemäß der Erfindung. Das Ersatzteil 10 und die Ersatzteilträgervorrichtung 12 sind dabei im Unterschied zum vorhergehenden Ausführungsbeispielzweiteilig ausgebildet, wobei die Kopplung vorliegend dadurch erzielt wird, dass der Kopplungsbereich 12a der Ersatzteilträgervorrichtung 12 eine korrespondierend mit einer Außenkontur des Ersatzteils 10 ausgebildeten Nut 16 umfasst, in welche das Ersatzteil 10 eingesteckt ist. Hierdurch wird ein engtolerierter Schiebsitz erzeugt. Das Ersatzteil 10 und die Ersatzteilträgervorrichtung 12 können wie bereits erwähnt grundsätzlich aus dem gleichen oder einem unterschiedlichen Material gefertigt sein. Ebenso kann vorgesehen sein, dass die Ersatzteilträgervorrichtung 12 mehrteilig ausgebildet ist (vgl. Fig. 7), wobei alle Teile aus dem gleichen oder aus unterschiedlichen Materialien bestehen können.

Zum Verbinden von Ersatzteil 10 und Ersatzteilträgervorrichtung 12 können in Abhängigkeit der jeweiligen Materialpaarung von Ersatzteil 10 und Ersatzteilträgervorrichtung 12 entsprechende Fügeverfahren verwendet werden. Dabei sind Fügeverfahren bevorzugt, durch die eine einerseits ausreichend stabile und andererseits lösbare Verbindung erzeugt wird. Insbesondere ist es bevorzugt, wenn das Ersatzteil 10 und die Ersatzteilträgervorrichtung 12 zerstörungsfrei - beispielsweise durch Zerlegen bzw. Demontieren - wieder voneinander trennbar sind, so dass die Ersatzteilträgervorrichtung 12 nach dem Reparieren eines beschädigten Bauteils 14 (s. Fig. 3) für weitere Reparaturdurchgänge wiederverwendet werden kann.

Die Ersatzteilträgervorrichtung 12 umfasst wie bereits beschrieben den als Wärmepuffer wirksamen Energiepufferbereich 12b, welcher gegenüber dem Ersatzteil 10 verdickt und wesentlich massiver und voluminöser ausgebildet ist. Zusätzlich ist im vorliegenden Ausführungsbeispiel auch der Kopplungsbereich 12a - abgesehen von der Nut 16 - gegenüber dem Ersatzteil 10 verdickt und wesentlich massiver und voluminöser ausgebildet.
Hierdurch wird analog zum ersten Ausführungslaeispiel ein relativ gleichförmiger Temperaturgradient beim Verschweißen von Ersatzteil 10 und Bauteil 14 sowie eine zuverlässige Aufnahme von beim Anordnen und Verbinden mit dem Bauteil 14 auftretenden mechanischen Kräften erzielt. Nach dem Verschweißen kann die Ersatzteilträgervorrichtung 12 einfach vom Ersatzteil 10 abgenommen werden und für einen weiteren Verfahrensdurchlauf zum Einsatz kommen. Somit kann auf das ansonsten erforderliche Abtrennen der Ersatzteilträgervorrichtung 12 mittels spanabhebender Trennverfahren verzichtet werden, wodurch aufgrund des verringerten Materialaufwands und der Verkürzung der Prozesszeit entsprechende Kosteneinsparungen erzielt werden.

Fig. 3 zeigt eine schematische und ausschnittsweise Perspektivansicht eines Rotors 18 einer nicht dargestellten thermischen Gasturbine für ein Flugzeug. Der Rotor 18 umfasst eine Mehrzahl an Schaufeln, welche vorliegend die zu reparierenden Bauteile 14 darstellen. Zum Reparieren eines Bauteils 14 wird zunächst ein entsprechendes Ersatzteil 10 bereitgestellt, welches vorzugsweise aus dem gleichen Material wie das Bauteil 14 besteht und vorab mit dem Kopplungsbereich 12a der vorliegend mehrteilig ausgebildeten Ersatzteilträgervorrichtung 12 verbunden wird. Das Verbinden erfolgt dabei analog dem vorhergehenden Ausführungsbeispiel, wobei jedoch sämtliche vorstehend beschriebenen alternativen Verbindungsarten vorgesehen sein können. Anschließend wird das Ersatzteil 10 am beschädigten Bereich des Bauteils 14 angeordnet, wonach die Ersatzteilträgervorrichtung 12 über eine zusätzliche Halteeinrichtung 12c - beispielsweise durch Verschrauben - lösbar mit dem Rotor 18 verbunden wird. Hierdurch wird eine besonders einfache und zuverlässige Lagefixierung des Ersatzteils 10 gegenüber dem Bauteil 14 erzielt, da das Bauteil 14 und der Rotor 18 ihrerseits fest miteinander verbunden sind. Die Ersatzteilträgervorrichtung 12 ist daher sowohl über das Ersatzteil 10 als auch über ihre Halteeinrichtung 12c und den Rotor 18 mittelbar mit dem Bauteil 14 verbunden.

Die Halteeinrichtung 12c ermöglicht es im vorliegenden Ausführungsbeispiel, dass die Ersatzteilträgervorrichtung 12 mit einer eingestellten Vorspannung am Bauteil 14 angeordnet wird. Hierdurch ist beim Verschweißen von Ersatzteil 10 und Bauteil 14 eine zuverlässige Abstützung des Ersatzteils 10 über die mehrteilige Ersatzteilträgervorrichtung 12 gegeben. Die Halteeinrichtung 12c umfasst zu diesem Zweck eine Mehrzahl von Verstellmechanismen 20, so dass sämtliche, aufgrund der dreidimensionalen Bauteilgeometrie gegebenen Kraftvektoren zumindest weitgehend aufgenommen werden können. Zusätzlich können wie vorstehend beschrieben jegliche thermisch und mechanisch bedingten Dehn- und Schrumpfkräfte, die nicht durch den Kopplungsbereich 12a und/oder den Energiepufferbereich 12b aufgenommen werden, abgefangen werden, so dass das Ersatzteil 10 verformungsfrei an das Bauteil 14 angeschweißt werden kann. Die Vorspannkraft und -richtung kann je nach Bauteilgeometrie und Schweißverfahren optimal eingestellt werden.

Das Abstützen des Ersatzteils 10 erfolgt dabei mit einer voreingestellten Vorspannung, d. h. die Halteeinrichtung 12c drückt mit einer genau eingestellten Kraft über den Energiepufferbereich 12b und den Kopplungsbereich 12a gegen das Ersatzteil 10. Auf diese Weise werden sämtliche Toleranzen kompensiert, wobei das Ersatzteil 10 und das zu reparierende Bauteil 14 nur im elastischen Bereich beansprucht werden.

Dabei kann weiterhin vorgesehen sein, dass die Ersatzteilträgervorrichtung 12 selbst zerlegbar ausgebildet ist, so dass der Kopplungsbereich 12a, der Energiepufferbereich 12b und/oder die Halteeinrichtung 12c ausgetauscht und individuell an unterschiedliche Ersatzteile 10 und Bauteile 14 bzw. Rotoren 16 angepasst werden können. Beispielsweise können der Energiepufferbereich 12b und der Kopplungsbereich 12a auf diese Weise entsprechend einfach mit unterschiedlichen Halteeinrichtungen 12c kombiniert werden, so dass die Ersatzteilträgervorrichtung 12 einfach an unterschiedliche Bauteile 14, Rotortypen oder Beschädigungsprofile anpassbar ist. Nach dem Verschweißen kann die Ersatzteilträgervorrichtung 12 einfach und zerstörungsfrei vom mit dem Bauteil 14 verbundenen Ersatzteil 10 bzw. dem Rotor 18 entfernt und für einen weiteren Reparaturdurchgang wiederverwendet werden. Das reparierte Bauteil 14 kann anschließend bei Bedarf feinbearbeitet werden.

Fig. 4 zeigt eine schematische Seitenansicht des Ersatzteils 10, welches mit einer Ersatzteilträgervorrichtung 12 gemäß dem Stand der Technik und einem zu reparierenden, ebenfalls als Triebwerksschaufel ausgebildeten Bauteil 14 verbunden ist. Fig. 4 wird im Folgenden in Zusammenschau mit Fig. 5 erläutet werden, welche ihrerseits eine schematische Schnittaufsicht des mit der Ersatzteilträgervorrichtung 12 und der Schaufel 14 verbundenen Ersatzteils 10 entlang der in Fig. 4 abgebildeten Schnittlinie V-V zeigt. Dabei ist insbesondere in Fig. 5 erkennbar, dass die Ersatzteilträgervorrichtung 12 das Ersatzteil 10 gemäß Pfeil Va mit einer Stell- und Haltekraft beaufschlagt, die senkrecht zu einer Verbindungsfläche F zwischen dem Bauteil 14 und dem Ersatzteil 10 gerichtet ist. Mit anderen Worten stützt die Ersatzteilträgervorrichtung 12 das Ersatzteil 10 in einer Ebene ab. Dies gewährleistet zusammen mit der Energiepufferfähigkeit des Energiepufferbereichs 12b der Ersatzteilträgervorrichtung 12, dass das Ersatzteil 10 und das Bauteil 14 verformungsfrei miteinander verbunden werden können.

Fig. 6 zeigt eine schematische Schnittaufsicht des mit einer erfindungsgemäßen Ersatzteilträgervorrichtung 12 und dem Bauteil 14 verbundenen Ersatzteils 10. Dabei umfasst der Kopplungsbereich 12a der Ersatzteilträgervorrichtung 12 im Unterschied zum vorhergehenden Ausführungsbeispiel die vorstehend erläuterte Nut 16, so dass das Ersatzteil 10 gemäß den Pfeilen VIa, VIb in zwei Ebenen abgestützt wird. Hierdurch ist das Ersatzteil 10 besonders zuverlässig gegen ein Verkippen gegenüber dem Bauteil 14 gesichert und kann verformungsfrei mit diesem verbunden werden. Dabei kann grundsätzlich vorgesehen sein, dass die Ersatzteilträgervorrichtung 12 das Ersatzteil 10 wie hier gezeigt nur über einen Teillängenbereich oder alternativ über die gesamte Länge des Ersatzteils 10 abstützt.

Fig. 7 zeigt eine schematische Schnittaufsicht des mit einer alternativen Ersatzteilträgervorrichtung 12 und dem Bauteil 14 verbundenen Ersatzteils 10. Die Ersatzteilträgervorrichtung 12 umfasst im gezeigten Ausführungsbeispiel einen zweiteilig ausgebildeten Kopplungsbereich 12a, 12a'. Die Kopplungsbereiche 12a, 12a' werden zunächst gemäß den Pfeilen VIIa, VIIb auf das Ersatzteil 10 geschoben und miteinander verschraubt, um die Ersatzteilträgervorrichtung 12 mit dem Ersatzteil 10 zu verbinden. Aufgrund der geometrischen Ausgestaltung der Kopplungsbereiche 12a, 12a' wird hierdurch auch die Nut 16 ausgebildet, so dass das Ersatzteil 10 analog dem vorhergehenden Ausführungsbeispiel gemäß den Pfeilen VIa, VIb in zwei Ebenen abgestützt wird. Auf diese Weise ist das Ersatzteil 10 wiederum besonders zuverlässig gegen ein Verkippen gegenüber dem Bauteil 14 gesichert und kann verformungsfrei mit diesem verbunden werden. Zusätzlich wird das Bauteil 14 an seinem der Ersatzteilträgervorrichtung 12 abgewandten Endbereich mittels eines optionalen Stützelements 22 abgestützt. Das Stützelement 22 kann dabei grundsätzlich als Teil der Ersatzteilträgervorrichtung 12 oder als selbständiges Bauelement vorgesehen bzw. ausgebildet sein. Nach dem Verbinden von Ersatzteil 10 und Bauteil 14 kann die Ersatzteilträgervorrichtung 12 zudem besonders schnell und einfach durch Demontage der Kopplungsbereiche 12a, 12a' vom Ersatzteil 10 entfernt und für weitere Reparaturdurchgänge wiederverwendet werden.

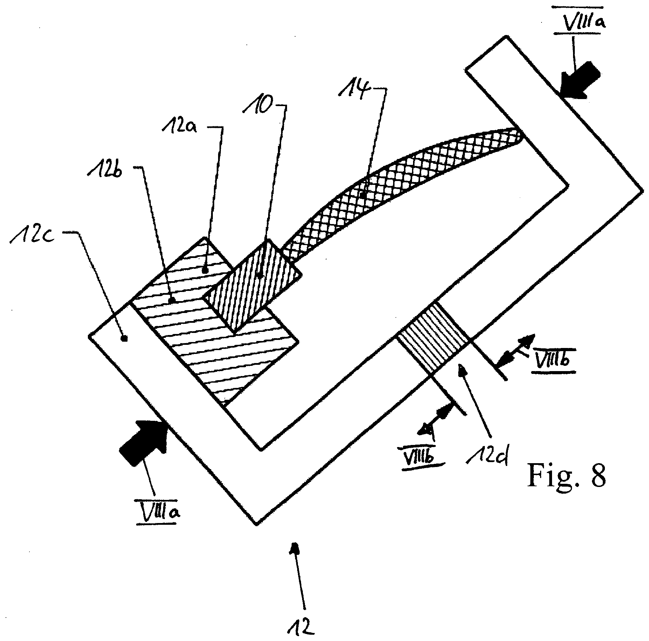

Fig. 8 zeigt eine schematische Schnittaufsicht des mit einer weiteren alternativen Ersatzteilträgervorrichtung 12 und dem Bauteil 14 verbundenen Ersatzteils 10. Im Unterschied zu den vorhergehenden Ausführungsbeispielen umfasst die Halteeinrichtung 12c ein Spannmittel 12d, mittels welchem das Bauteil 14 gemäß den Pfeilen VIIIa schraubstock- bzw. schraubzwingenartig eingespannt werden kann. Zur Kraftübertragung wird das Spannmittel 12d gemäß den Doppelpfeilen VIIIb verstellt, um die Spannweite der Halteeinrichtung 12c an das Bauteil 14 anzupassen. Die Betätigung kann sowohl manuell als auch computergesteuert erfolgen, wobei die Kraft grundsätzlich mechanisch, magnetisch, pneumatisch oder hydraulisch aufgebracht werden kann. Nach dem Reparieren kann das Bauteil 14 durch Lösen des Spannmittels 12d und Entkoppeln des Kopplungsbereichs 12a einfach freigegeben werden. Nach dem erneuten Koppeln eines neuen Ersatzteils 10 kann die Ersatzteilträgervorrichtung 12 für einen weiteren Reparaturdurchgang verwendet werden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Reparieren eines beschädigten Bauteils (14) einer Strömungsmaschine, folgende Schritte umfassend:
- Bereitstellen eines Ersatzteils (10), welches mit einer gegenüber dem Ersatzteil (10) verdickt ausgebildeten Ersatzteilträgervorrichtung (12) zum Puffern von mechanischer und thermischer Energie verbunden ist;
- Anordnen des mit der Ersatzteilträgervorrichtung (12) verbundenen Ersatzteils (10) im Bereich der Beschädigung des Bauteils (14);
- Verbinden des Ersatzteils (10) mit dem Bauteil (14), wobei beim Verbinden freigesetzte mechanische und thermische Energie mittels der Ersatzteilträgervorrichtung (12) gepuffert wird; und
- Entfernen der Ersatzteilträgervorrichtung (12) vom mit dem Bauteil (14) verbundenen Ersatzteil (10), **dadurch gekennzeichnet, dass** eine wiederverwendbare Ersatzteilträgervorrichtung (12) mit einer Nut (16) für das Ersatzteil (10) verwendet wird und dass das Ersatzteil (10) zum lösbaren Verbinden mit der Ersatzteilträgervorrichtung (12) zumindest bereichsweise in der korrespondierend ausgebildeten Nut (16) der Ersatzteilträgervorrichtung (12) angeordnet wird.

2. Verfahren nach Anspruch 1, **dadurch gekennzeichnet, dass** das Bauteil (14) vor dem Anordnen des Ersatzteils (10) zumindest im Bereich seiner Beschädigung bearbeitet wird.

3. Verfahren nach Anspruch 1 oder 2, **dadurch gekennzeichnet, dass** das Ersatzteil (10) mittels der Ersatzteilträgervorrichtung (12) lagefest gegenüber dem Bauteil (14) und/oder mit einer eingestellten Vorspannung am Bauteil (14) angeordnet wird.

4. Verfahren nach einem der Ansprüche 1 bis 3, **dadurch gekennzeichnet, dass** das Bauteil (14) beim Anordnen bereichsweise in eine nutförmige Vertiefung (11) des Ersatzteils (10) eingebracht wird.

5. Verfahren nach einem der Ansprüche 1 bis 4, **dadurch gekennzeichnet, dass** das Ersatzteil (10) mittels eines Schweißverfahrens, insbesondere durch Elektronenstrahlschweißen, Laserschweißen, Wolfram-Inertgas-Schweißen, Plasmaschweißen, Stich-Loch-Schweißen, Induktionsschmelzschweißen und/oder Widerstandsschweißen, mit dem Bauteil (14) verbunden wird.

6. Verfahren nach einem der Ansprüche 1 bis 5, **dadurch gekennzeichnet, dass** das Bauteil (14) nach dem Entfernen der Ersatzteilträgervorrichtung (12) zumindest in seinem Verbindungsbereich mit dem Ersatzteil (10) bearbeitet, insbesondere feinbearbeitet wird.

7. Verfahren nach einem der Ansprüche 1 bis 6, **dadurch gekennzeichnet, dass** als Bauteil (14) eine Schaufel einer thermischen Gasturbine repariert wird.

8. Ersatzteilträgervorrichtung (12) zum Anordnen eines Ersatzteils (10) im Bereich einer Beschädigung eines Bauteils (14) einer Strömungsmaschine, mit einem Kopplungsbereich (12a) zum Verbinden des Ersatzteils (10) mit der Ersatzteilträgervorrichtung (12) und mit einem Energiepufferbereich (12b), welcher gegenüber dem am Kopplungsbereich (12a) anzuordnenden Ersatzteil (10) verdickt ausgebildet ist und mittels welchem beim Verbinden des Ersatzteils (10) mit dem Bauteil (14) freigesetzte thermische und mechanische Energie pufferbar ist, **dadurch gekennzeichnet, dass** der Kopplungsbereich (12a) zum mehrfachen Koppeln und Entkoppeln von Ersatzteilen (10) ausgebildet ist und dabei eine Nut (16) aufweist, um das Ersatzteil (10) zumindest über einen Teillängenbereich abzustützen.

9. Ersatzteilträgervorrichtung (12) nach Anspruch 8, **dadurch gekennzeichnet, dass** diese ausgebildet ist, das Ersatzteil (10) lagefest gegenüber dem Bauteil (14) und/oder mit einer einstellbaren Vorspannung am Bauteil (14) anzuordnen.

10. Ersatzteilträgervorrichtung (12) nach Anspruch 8 oder 9, **dadurch gekennzeichnet, dass** diese eine Halteeinrichtung (12c) umfasst, mittels welcher die Ersatzteilträgervorrichtung (12) lösbar mit dem Bauteil (14) koppelbar ist.

11. Ersatzteilträgervorrichtung (12) nach Anspruch 10, **dadurch gekennzeichnet, dass** der Kopplungsbereich (12a) und/oder der (12b) lösbar mit der Halteeinrichtung (12c) verbunden sind.

12. Ersatzteilträgervorrichtung (12) nach Anspruch 10 oder 11, **dadurch gekennzeichnet, dass** die Halteeinrichtung (12c) ein Spannmittel (12d) zum lösbaren Einspannen des Bauteils (14) umfasst.

## Claims

1. A method for repairing a damaged component (14) of a turbomachine, the method comprising the following steps:
• providing a replacement part (10), which is connected to a replacement part carrying device (12) that is thicker than the replacement part (10), in order to buffer mechanical and thermal energy;
• arranging the replacement part (10), having been connected to the replacement part carrying device (12), in the region of the damage to the component (14);
• connecting the replacement part (10) to the component (14), wherein mechanical and thermal energy released during the connecting is buffered by means of the replacement part carrying device (12); and
• removing the replacement part carrying device (12) from the replacement part (10) connected to the component (14), **characterized in that**: a reusable replacement part carrying device (12) having a groove (16) for the replacement part (10) is used; and the replacement part (10), for releasably connecting to the replacement part carrying device (12), is arranged at least regionally in the correspondingly-configured groove (16) of the replacement part carrying device (12).

2. The method according to claim 1, **characterized in that**: the component (14) is processed at least in the region of the damage thereto before the replacement part (10) is arranged.

3. The method according to claim 1 or 2, **characterized in that**: the replacement part (10) is arranged by means of the replacement part carrying device (12) so as to be stationary relative to the component (14) and/or with an applied pre-stress on the component (14).

4. The method according to any of claims 1 to 3, **characterized in that**: the component (14), when being arranged, is introduced regionally into a groove-shaped depression (11) of the replacement part (10).

5. The method according to any of claims 1 to 4, **characterized in that**: the replacement part (10) is connected to the component (14) by means of a welding method, in particular, by electron beam welding, laser welding, tungsten inert gas welding, plasma welding, keyhole welding, induction fusion welding, and/or resistance welding.

6. The method according to any of claims 1 to 5, **characterized in that**: after the replacement part carrying device (12) has been removed, the component (14) is processed-in particular, precision-machined-at least in a connection region thereof to the replacement part (10).

7. The method according to any of claims 1 to 6, **characterized in that**: a blade of a thermal gas turbine is repaired as the component (14).

8. A replacement part carrying device (12) for arranging a replacement part (10) in the region of damage to a component (14) of a turbomachine, having a coupling region (12a) for connecting the replacement part (10) to the replacement part carrying device (12), and having an energy buffer region (12b) which is thicker than the replacement part (10) being arranged on the coupling region (12a) and by means of which thermal and mechanical energy released when the replacement part (10) is being connected to the component (14) can be buffered, **characterized in that**: the coupling region (12a) is configured for multiple couplings and uncouplings of replacement parts (10), and therein has a groove (16) in order to support the replacement part (10) at least over a partial length region.

9. The replacement part carrying device (12) according to claim 8, **characterized by** being configured to arrange the replacement part (10) so as to be stationary relative to the component (14) and/or with an adjustable pre-stress on the component (14).

10. The replacement part carrying device (12) according to claim 8 or 9, **characterized by** comprising a securing device (12c) by means of which the replacement part carrying device (12) can be releasably coupled to the component (14).

11. The replacement part carrying device (12) according to claim 10, **characterized in that**: the coupling region (12a) and/or the (12b) are releasably connected to the securing device (12c).

12. The replacement part carrying device (12) according to claim 10 or 11, **characterized in that**: the securing device (12c) comprising a clamping means (12d) for releasably clamping the component (14).

## Revendications

1. Procédé de réparation d'un composant endommagé (14) d'une turbomachine, le procédé comprenant les étapes suivantes :
- produire une pièce de rechange (10) qui est reliée à un dispositif de support de pièce de rechange (12), de forme épaissie par rapport à la pièce de rechange (10), pour stocker temporairement de l'énergie mécanique et thermique ;
- disposer la pièce de rechange (10), reliée au dispositif de support de pièce de rechange (12), au niveau de la zone endommagée du composant (14) ;
- relier la pièce de rechange (10) au composant (14), de l'énergie mécanique et thermique libérée lors de la liaison étant stockée temporairement par le dispositif de support de pièce de rechange (12) ;
- retirer le dispositif de support de pièce de rechange (12) de la pièce de rechange (10) reliée au composant (14), **caractérisé en ce que** l'on utilise un dispositif de support de pièce de rechange (12) réutilisable pourvu d'une rainure (16) destinée à la pièce de rechange (10) et **en ce que** la pièce de rechange (10) destinée à être reliée de façon amovible au dispositif de support de pièce de rechange (12) est disposée au moins par endroits dans la rainure (16), de forme correspondante, du dispositif de support de pièce de rechange (12).

2. Procédé selon la revendication 1, **caractérisé en ce que** le composant (14) est traitée au moins dans sa zone endommagée avant de disposer la pièce de rechange (10).

3. Procédé selon la revendication 1 ou 2, **caractérisé en ce que** la pièce de rechange (10) est disposée au moyen du dispositif de support de pièce de rechange (12) sur le composant (14) dans une position fixe par rapport au composant (14) et/ou avec une précontrainte réglée.

4. Procédé selon l'une des revendications 1 à 3, **caractérisé en ce que** le composant (14) est introduit dans un évidement (11) en forme de rainure de la pièce de rechange pendant la mise en place.

5. Procédé selon l'une des revendications 1 à 4, **caractérisé en ce que** la pièce de rechange (30) est reliée au composant (14) par un procédé de soudage, notamment par soudage par faisceau d'électrons, soudage au laser, soudage au gaz inerte et au tungstène, soudage au plasma, soudage au bouchon, soudage par fusion par induction et/ou soudage par résistance.

6. Procédé selon l'une des revendications 1 à 5, **caractérisé en ce que**, auprès le retrait du dispositif de support de pièce de rechange (12), le composant (14) est soumis au moins dans sa zone de liaison à la pièce de rechange (10) à un usinage, en particulier un usinage fin.

7. Procédé selon l'une des revendications 1 à 6, dans lequel le composant (14) réparé est une aube d'une turbine à gaz thermique.

8. Dispositif de support de pièce de rechange (12), destiné à disposer une pièce de rechange (10) dans la zone endommagée d'un composant (14) d'une turbomachine, comprenant une zone d'accouplement (12a) destinée à relier la pièce de rechange (10) au dispositif de support de pièce de rechange (12) et une zone de stockage temporaire d'énergie (12b) qui a une forme épaissie par rapport à la pièce de rechange (10) à disposer au niveau de la zone d'accouplement (12a) et au moyen de laquelle, de l'énergie mécanique et thermique, libérée lors de la liaison de la pièce de rechange (10) au composant (14), peut être stockée temporairement, **caractérisé en ce que** la zone d'accouplement (12a) est conçue pour l'accouplement et le désaccouplement multiples de pièces de rechange (10) et comporte pour cela une rainure (16) destinée à supporter la pièce de rechange (10) au moins sur une partie de sa longueur.

9. Dispositif de support de pièce de rechange (12) selon la revendication 8, **caractérisé en ce qu'**il est conçu pour disposer la pièce de rechange (10) sur le composant (14) dans une position fixe par rapport au composant (14) et/ou avec une précontrainte réglable.

10. Dispositif de support de pièce de rechange (12) selon la revendication 8 ou 9, **caractérisé en ce qu'**il comporte un moyen de retenue (12c) à l'aide duquel le dispositif de support de pièces de rechange (12) peut être accouplé de manière amovible au composant (14).

11. Dispositif de support de pièce de rechange (12) selon la revendication 10, **caractérisé en ce que** la zone d'accouplement (12a) et/ou la zone de stockage temporaire d'énergie (12b) sont reliées de manière amovible au moyen de retenue (12c).

12. Dispositif de support de pièce de rechange selon la revendication 10 ou 11, **caractérisé en ce que** le dispositif de retenue comprend un moyen de serrage (12d) destiné à serrer de manière libérable le composant (14),
